Europäisches Patentamt

**European Patent Office**

Office européen des brevets

(19)

(11) Numéro de publication: **0 006 036**
**B1**

(12) ## FASCICULE DE BREVET EUROPEEN

(45) Date de publication du fascicule de brevet: **05.08.81**

(51) Int. Cl.³: **F 16 F 9/38, B 60 G 15/06**

(21) Numéro de dépôt: **79400221.2**

(22) Date de dépôt: **05.04.79**

(54) **Dispositif protecteur, notamment pour tige d'amortisseur télescopique.**

(30) Priorité: **29.05.78 FR 7815931**

(43) Date de publication de la demande:
**12.12.79 Bulletin 79/25**

(45) Mention de la délivrance du brevet:
**05.08.81 Bulletin 81/31**

(84) Etats Contractants Désignés:
**DE GB IT**

(56) Documents cités:
**DE - A - 1 775 313**
**DE - B - 1 253 522**
**FR - A - 1 277 125**
**FR - A - 1 470 539**
**FR - A - 1 540 158**
**FR - A - 1 589 929**
**FR - A - 2 138 839**
**FR - A - 2 271 452**
**FR - A - 2 360 014**
**FR - E - 25 280**
**GB - A - 1 085 388**
**US - A - 3 412 990**

(73) Titulaire: **AUTOMOBILES PEUGEOT**
**75, avenue de la Grande Armée**
**F-75116 Paris (FR)**

(73) Titulaire: **SOCIETE ANONYME AUTOMOBILES CITROEN**
**117 à 167, Quai André Citroen**
**F-75747 Paris Cedex 15 (FR)**

(72) Inventeur: **Buffard, Guy**
**Rue de la Combe aux Biches**
**F-25200 Montbeliard (FR)**
Inventeur: **Level, Jean-Paul**
**3 Rue des Fréres Doyer**
**F-90000 Belfort (FR)**

(74) Mandataire: **Bressand, Georges et al,**
**c/o CABINET LAVOIX 2 Place d'Estienne d'Orves**
**F-75441 Paris Cedex 09 (FR)**

Courier Press, Leamington Spa, England.

EP 0 006 036 B1

## Dispositif protecteur, notamment pour tige d'amortisseur télescopique

La présente invention concerne les dispositifs de protection ou "protecteurs" d'organes coulissants tels que des tiges d'amortisseurs télescopiques.

Dans un tel amortisseur télescopique, la tige fait saillie à l'extérieur du corps sur une longueur variable et les protecteurs habituellement utilisés, fixés sur l'extrémité du corps par laquelle la tige fait saillie, ne protègent pas toute la longueur de la tige car il serait impossible de les loger dans la position la plus rentrée, dite d'attaque, de cette dernière. Il en résulte que cette tige reçoit des projections d'eau, de boue, de sable, etc, qui la corrodent, ce qui entraîne un frottement plus important de la tige dans son palier, à l'entrée du corps de l'amortisseur, ainsi qu'un risque de fuite du liquide au droit de ce même palier.

Le brevet FR - A - 1.470.539 décrit un dispositif de protection, comportant un tube de recouvrement en matière élastique et fixé à l'extrémité de la tige de l'amortisseur. Cependant un tel agencement ne convient que si le tube de recouvrement peut coulisser librement le long du corps de l'amortisseur, ce qui n'est pas le cas lorsque l'amortisseur est disposé à l'intérieur d'un resort hélicoïdal de suspension, prenant appui sur une coupelle fixée sur le corps de l'amortisseur.

Enfin, le brevet FR—A—1.277.125 décrit un amortisseur télescopique dont la tige est entourée par un ressort creux en caoutchouc et par un protecteur rigide. Le ressort creux constitue une butée élastique pour le corps de l'amortisseur, lorsque la tige approche de sa position d'enfoncement maximal; il n'y a par contre aucune fonction de protection. Quant au tube protecteur rigide il ne peut être efficace qu'en l'absence de ressort hélicoïdal et de coupelle d'appui.

Cette invention a donc pour but de fournir un dispositif qui assure par des moyens simples une protection efficace de l'organe coulissant.

Elle a pour objet un dispositif protecteur d'une tige d'amortisseur télescopique ou autre organe coulissant dans un palier, comprenant un tube ou manchon souple, fixé sur l'organe coulissant, caractérisé en ce que ledit tube souple comporte dans au moins une zone de sa longueur, au moins une série de fentes espacées autour de la périphérie du tube et orientées à peu près suivant les génératrices de ce dernier, le bord libre du tube étant adapté pour coopérer avec une surface solidaire du palier, lors du déplacement relatif de la tige et de ce palier l'un vers l'autre.

Suivant un mode de réalisation, le tube souple comporte deux séries de fentes décalées axialement l'une par rapport à l'autre et agencées de telle façon que le tube se déforme d'abord dans la zone dans laquelle se trouve la série de fentes la plus proche de l'extrémité libre du tube.

A cet effet, le nombre de fentes de la série la plus proche de l'extrémité libre peut être supérieur au nombres de fentes de l'autre série et la longueur des fentes de cette première série peut être supérieure à la longueur des fentes de la deuxième série.

Dans l'application à un amortisseur télescopique, le diamètre interne du tube est choisi supérieur au diamètre externe du corps de l'amortisseur et le bord libre du tube vient en contact avec une pièce solidaire de ce corps.

L'invention va être décrite plus en détail ci-dessous en se référant aux dessins annexés donnés uniquement à titre d'exemple et sur lesquels:

la Fig. 1 est une vue en coupe longitudinale d'un amortisseur télescopique comportant un protecteur suivant l'invention, en position moyenne;

la Fig. 2 est une vue de ce même amortisseur après un début de déplacement vers sa position d'attaque;

la Fig. 3 est une vue en coupe axiale d'un tube ou manchon protecteur à deux séries de fentes; et

la Fig. 4 est une vue également en coupe axiale d'un tube ou manchon à une seule série de fentes.

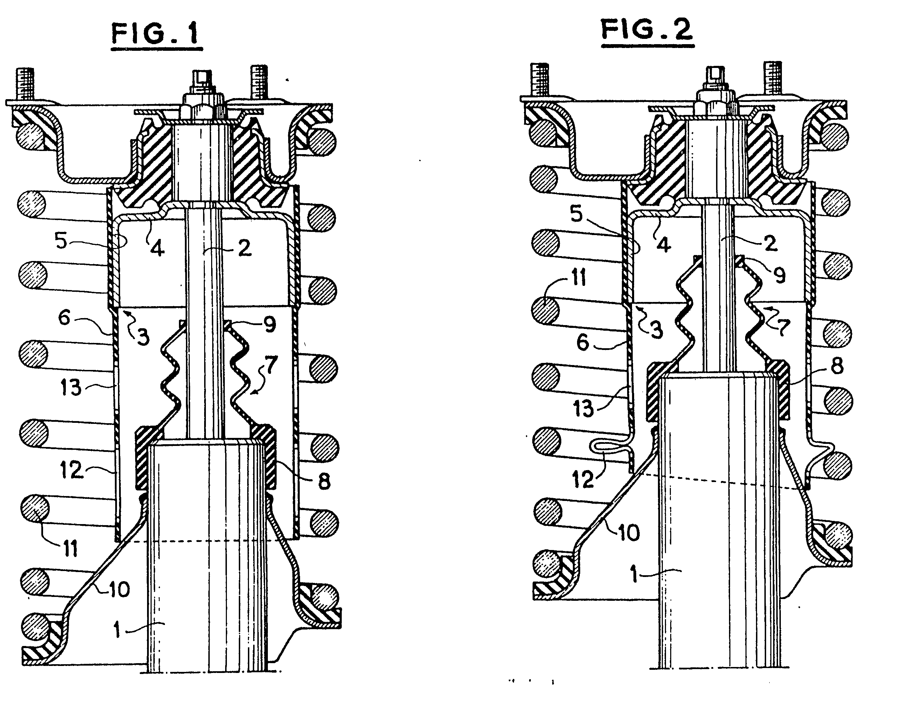

On voit sur la figure 1 l'extrémité supérieure d'un amortisseur pour véhicule automobile comprenant un corps 1 et une tige 2. A sa partie supérieure, la tige 2 est reliée par des moyens connus à la partie suspendue du véhicule et elle porte en particulier une coupelle 3 comportant un fond 4 et une partie cylindrique 5, le fond coopérant avec une butée en élastomère tandis que la jupe cylindrique sert de support à un manchon protecteur 6 suivant l'invention, en élastomère souple.

La tige est guidée dans le corps par un palier non représenté et elle est protégée au voisinage de la zone d'entrée dans ce corps par un soufflet 7 en élastomère fixé par une extrémité 8 sur le corps et en contact par son autre extrémité 9 avec la tige 2.

Le tube ou manchon 6 est emmanché et maintenu par tout moyen convenable sur la jupe cylindrique 5 et s'étend jusqu'au voisinage d'une coupelle 10 fixée sur le corps de l'amortisseur et qui sert également de surface d'appui pour un ressort 11. Le diamètre du tube 6 est donc intermédiaire entre le diamètre du corps 1 et le diamètre interne du ressort 11.

Ce manchon ou tube 6 comporte dans l'exemple choisi deux séries de fentes 12, 13, les fentes de chaque série étant espacées les unes des autres autour de la périphérie du tube et ces diverses fentes s'étendant parallèlement aux génératrices du tube. Les fentes d'une série sont par ailleurs comprises entre deux plans perpendiculaires à l'axe du tube 6.

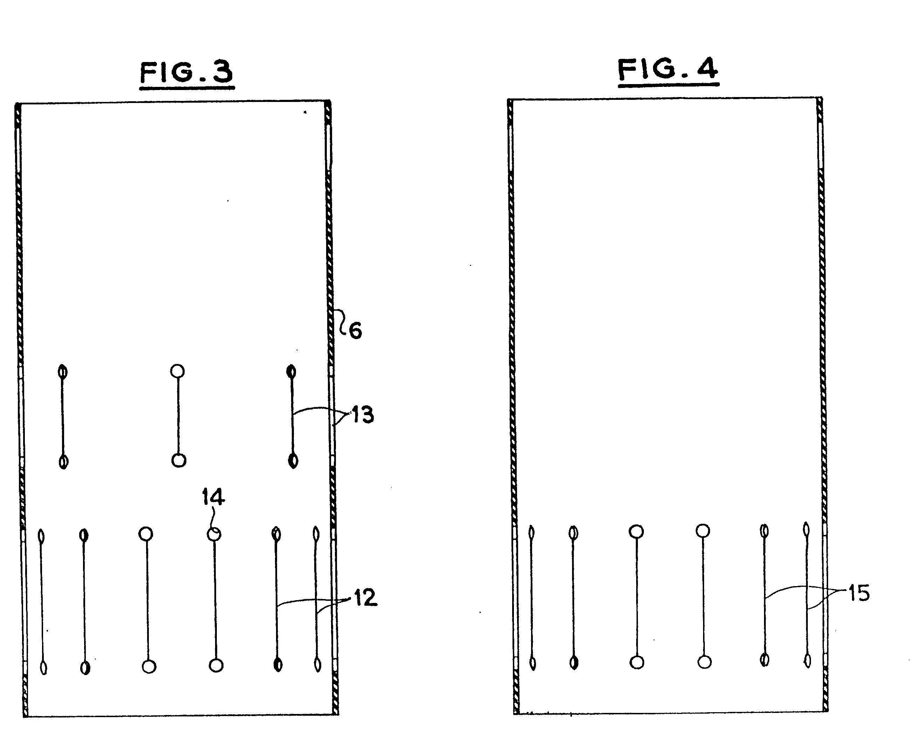

On voit sur la Fig. 3 la disposition des fentes de chaque série et l'on remarquera que les fentes 12 sont plus longues et plus nombreuses que les fentes 13. C'est ainsi que dans un exemple de réalisation on peut prévoir quatorze fentes 12 et huit fentes 13, ces fentes étant de préférence constituées par des découpes à lèvres jointives et se terminant par des orifices arrondis 14.

Le fonctionnement d'un tel dispositif est particulièrement simple; dans la position moyenne représentée à la Fig. 1, les fentes sont jointives et la manchon 6 protège bien toute la partie de la tige située au-dessus du soufflet 7 dont la longueur est limitée par la possibilité de logement en position maximale d'attaque.

Lors d'un enfoncement de la tige dans le corps de l'amortisseur, le bord libre du tube en élastomère vient en contact avec la coupelle 10 ce qui provoque, comme représenté sur la Fig. 2, une déformation du tube dans la zone de la première série de fentes 12. La déformation se produit d'abord dans cette zone étant donné que les fentes y sont plus nombreuses et plus longues que dans la zone 13. L'écrasement du tube se traduit par la formation d'un pli dirigé vers l'extérieur, dans une région qui se trouve en face du corps de l'amortisseur de sorte que l'ouverture des fentes est sans inconvénient car elle ne se produit pas en face d'une partie découverte de la tige.

Si le mouvement d'enfoncement de cette tige se poursuit, le tube se déforme au niveau de la deuxième série de fentes, là encore dans une zone dans laquelle la tige se trouve protégée, soit par le corps de l'amortisseur, soit par le protecteur 7.

Suivant une variante plus simple, le protecteur peut ne comporter qu'une seule série de fentes 15, comme celà est représenté à la Fig. 4.

Il résulte de ce qui précède que le dispositif suivant l'invention permet de résoudre de façon efficace le problème posé étant donné qu'il assure une excellente protection de la tige de l'amortisseur sans pour autant gêner les débattements relatifs de la tige par rapport au corps. Ce dispositif est par ailleurs très simple à réaliser et à mettre en place et il est d'un prix de revient particulièrement faible.

Bien entendu, un tel dispositif peut être utilisé dans d'autres applications analogues.

## Revendications

1. Dispositif protecteur pour une tige d'amortisseur télescopique ou autre organe (2) coulissant dans un palier (1) comprenant un tube ou manchon souple (6), fixé sur l'organe coulissant (2), caractérisé en ce que ledit tube souple (6) comporte dans au moins une zone de sa longueur, au moins une série de fentes (12, 13) espacées autour de sa périphérie et à peu près parallèles à ses génératrices, le bord libre du tube (6) étant adapté pour coopérer avec une surface (10) solidaire du palier (1), lors d'un déplacement relatif de la tige (2) et du palier (1) l'un vers l'autre.

2. Dispositif suivant la revendication 1, caractérisé en ce que le tube souple (6) comporte deux séries de fentes (12, 13) décalées axialement l'une par rapport à l'autre.

3. Dispositif suivant la revendication 2, caractérisé en ce que la série de fentes (12) la plus proche du bord libre du tube souple comprend plus de fentes que l'autre série (13).

4. Dispositif suivant la revendication 2, caractérisé en ce que les fentes (12) de la série la plus proche du bord libre du tube souple sont plus longues que les fentes (13) de l'autre série.

5. Dispositif suivant l'une quelconques des revendications 1 à 4, caractérisé en ce que les fentes (12, 13) sont constituées par des découpes à lèvres jointives.

6. Dispositif suivant l'une quelconque des revendications 1 à 5, caractérisé en ce que les fentes d'une série sont comprises entre deux plans perpendiculaires à l'axe du tube.

7. Dispositif suivant l'une quelconque des revendications 1 à 6, appliqué à un amortisseur télescopique, caractérisé en ce que le tube souple (6) est fixé sur une coupelle (3, 4, 5) solidaire de la tige d'amortisseur (2).

8. Dispositif suivant la revendication 7, caractérisé en ce que le tube souple (6) a une diamètre intérieur supérieur au diamètre extérieur du corps (1) de l'amortisseur et son bord libre vient en contact, lors des débattements de l'amortisseur, avec une surface (10) solidaire du corps de l'amortisseur.

9. Dispositif suivant la revendication 8, caractérisé en ce que ladite surface (10) se trouve en un point intermédiaire du corps et le tube (6) s'étend le long du corps au-delà du point où la tige (2) fait saillie hors de ce corps.

## Claims

1. A device for protecting a rod of a telescopic shockabsorber or other member (2) slidable in a bearing (1), comprising a flexible tube or sleeve (6) fixed to a slidable member (2) characterized in that said flexible sleeve (6) comprises in at least one region of the length thereof at least one series of slits (12,13) which are spaced apart around the periphery of the tube or sleeve and extend roughly parallel to the generatrices thereof, the free edge of the sleeve (6) being adapted to cooperate with a surface (10) rigid with the bearing (1) in the course of the relative displacement of the rod (2) and bearing (1) toward each other.

2. A device as claimed in claim 1, characterized in that the flexible sleeve (6) comprises two series of slits (12,13) which are axially offset relative to each other.

3. A device as claimed in claim 2, characterized in that the series of slits (12) which is the nearest to the free edge of the flexible sleeve comprises more slits than the other series (13).

4. A device as claimed in claim 2, characterized in that the slits (12) of the series which is the nearest to the free edge of the sleeve are longer than the slits (13) of the other series.

5. A device as claimed in any one of the claims 1 to 4, characterized in that the slits (12,13) are formed by cuts in the sleeve which have adjoining lips.

6. A device as claimed in any one of the claims 1 to 5, characterized in that the slits of one series are located between two planes perpendicular to the axis of the tube.

7. A device as claimed in any one of the claims 1 to 6, applied to a telescopic shockabsorber, characterized in that the flexible sleeve (6) is fixed to a cup (3,4,5) which is rigid with the rod (2) of the shockabsorber.

8. A device as claimed in claim 7, characterized in that the flexible sleeve (6) has an inside diameter which is larger than the outside diameter of the body (1) of the shockabsorber and its free edge comes in contact with the surface (10) rigid with the body of the shockabsorber, in the course of the movements of the shockabsorber.

9. A device as claimed in claim 8, characterized in that said surface (10) is located in a region which is intermediate the ends of the body, and the sleeve extends along the body beyond the point where the rod (2) extends out of the body.

**Patentansprüche**

1. Schutzvorrichtung für eine Teleskopstossdämpferstange oder ein anderes in einem Lager (1) gleitendes Organ (2), mit einem biegsamen Rohr oder einer biegsamen Hülse (6), die am gleitenden Organ (2) befestigt ist, dadurch gekennzeichnet, dass das biegsame Rohr (6) in wenigstens einer Zone seiner Länge wenigstens eine Reihe von Schlitzen (12, 13) aufweist, die um seinen Umfang im Abstand verteilt und zu seinen Mantellinien etwa parallel sind, wobei der freie Rand des Rohrs (6) angepasst ist zum Zusammenarbeiten mit einer mit dem Lager (1) verbundenen Fläche (10) während einer gegenseitigen Verschiebung der Stange (2) und des Lagers (1).

2. Vorrichtung nach Anpruch 1, dadurch gekennzeichnet, dass das biegsame Rohr (6) zwei Reihen von Schlitzen (12, 13) aufweist, die axial gegeneinander versetzt sind.

3. Vorrichtung nach Anspruch 2, dadurch gekennzeichnet, dass die dem freien Rand des biegsamen Rohrs am nächsten gelegene Reihe von Schlitzen (12) mehr Schlitze als die andere Reihe (13) hat.

4. Vorrichtung nach Anspruch 2, dadurch gekennzeichnet, dass die Schlitze (12) der dem freien Rand des biegsamen Rohrs am nächsten gelegenen Reihe länger als die Schlitze (13) der anderen Reihe sind.

5. Vorrichtung nach einem der Ansprüche 1 bis 4, dadurch gekennzeichnet, dass die Schlitze (12, 13) aus Einschnitten mit aneinanderstossenden Rändern bestehen.

6. Vorrichtung nach einem der Ansprüche 1 bis 5, dadurch gekennzeichnet, dass die Schlitze einer Reihe zwischen zwei zur Achse des Rohrs senkrechten Ebenen enthalten sind.

7. Vorrichtung nach einem der Ansprüche 1 bis 6, angewendet bei einem Teleskopstosdämpfer, dadurch gekennzeichnet, dass das biegsame Rohr (6) an einer mit der Stossdämpferstange (2) verbundenen Schale (3, 4, 5) befestigt ist.

8. Vorrichtung nach Anspruch 7, dadurch gekennzeichnet, dass das biegsame Rohr (6) einen Innendurchmesser hat, der grösser als der Aussendurchmesser des Körpers (1) des Stossdämpfers ist, und dass sein freier Rand während her Hubbewegungen des Stoss-dämpfers in Berührung mit einer mit dem Körper des Stossdämpfers verbundenen Fläche (10) kommt.

9. Vorrichtung nach Anspruch 8, dadurch gekennzeichnet, dass sich die Fläche (10) an einer Zwischenstelle des Körpers befindet und dass sich das Rohr (6) längs des Körpers über die Stelle hinaus erstreckt, an der die Stange (2) aus dem Körper ragt.

FIG. 2

FIG. 1

FIG.3

FIG.4

0 006 036